# EUROPÄISCHE PATENTANMELDUNG

(11) **EP 1 302 800 A1**
(43) Veröffentlichungstag der Anmeldung: **16.04.2003**
(21) Anmeldenummer: 02400045.7
(22) Anmeldetag: 09.10.2002
(51) Int. Cl.: G02B 7/02

(54) **Halteeinrichtung für optische Elemente**

(30) Priorität: 11.10.2001 DE 10150947; 06.11.2001 DE 10155637
(71) Anmelder: Fraunhofer-Gesellschaft zur Förderung der angewandten Forschung e.V., 80636 München (DE)
(72) Erfinder: Damm, Christoph, 07743 Jena (DE); Kalkowski, Gerhard, 07743 Jena (DE); Peschel, Thomas, 07743 Jena (DE); Leitel, Armin, Dr. sc. tech., 07745 Jena (DE)
(74) Vertreter: Pfenning, Meinig & Partner GbR

(57) **Zusammenfassung**

Die Erfindung betrifft eine Halte- und Fixiereinrichtung für optische Elemente, insbesondere optische Linsen, die eine Projektionsoptik bilden können. Mit der Erfindung sollen aufgabengemäß eine Positionierung und Fixierung solcher optischer Elemente mit höherer Genauigkeit zueinander erreicht werden. Erfindungsgemäß werden dabei die optischen Elemente mit jeweils in gleicher Form ausgebildeten Elementen an mindestens drei in jeweils gleichen Winkelabständen zueinander angeordneten radial äußeren Randbereichen gehalten, wobei die optischen Elemente an jeweils gleichen Seiten mittels eines Festlagers und an der gegenüberliegenden Seite mittels eines Loslagers fixiert werden.

## Beschreibung

Die Erfindung betrifft eine Halte- und Fixiereinrichtung für optische Elemente, bevorzugt handelt es sich bei den optischen Elementen um optische Linsen, die eine Projektionsoptik bilden können und in dieser Form in sogenannten "Beamern" oder "optical engines" eingesetzt werden kann.

Aus dem Stand der Technik sind solche Systeme mit mehreren optischen Linsen, die in Gehäusen gefasst sind, seit langem bekannt. Solche Gehäuse können als Rohr bzw. Tubus ausgebildet sein. Für die optischen Linsen werden solche aus Kunststoff aber auch Glaslinsen eingesetzt. Die Fixierung und die Abstände dieser optischen Elemente erfolgte bisher durch möglichst präzise gefertigte Zwischenringe und Ringschneiden und es sind definierte Anlageflächen für eine hochgenaue Positionierung solcher optischen Elemente erforderlich. Die geforderte hohe Herstellungspräzision schlägt sich selbstverständlich in entsprechend hohen Herstellungskosten nieder.

Außerdem sind auch Fassungen aus Kunststoff bzw. aus Kunststoff in Spritzguß gefertigte Halterungen für optische Linsen bekannt. Diese sind unter dem Kostenaspekt wegen der möglichen großen Stückzahlen auch günstiger, weisen aber auch einen anderen Nachteil auf.

Da Temperaturänderungen beim Betrieb zwangsläufig auftreten und eine Temperierung entweder sehr kostenaufwendig ist oder nur bedingt Abhilfe schaffen kann, wirken sich der relativ große Wärmeausdehnungskoeffizient von Kunststoffen durch Lageänderungen der so gefassten optischen Elemente auf die Qualität der projizierten Abbildungen deutlich negativ aus. So kann bei einer entsprechenden Temperaturänderung sich der Abstand zwischen den einzelnen optischen Elementen verändern, so dass die gesamte Brennweite beeinflusst und entsprechend verändert wird. Des weiteren können Verkippungen der optischen Elemente und ein Abweichen von der gesamten optischen Achse, die durch mehrere optische Elemente vorgeben ist, auftreten.

Bei Kunststoffspritzgußteilen wirkt sich, insbesondere bei Teilen oder Bereichen mit geringer Wandstärke, der beim Ausformen zwangsläufige auftretende Verzug, nachteilig aus.

Um diesen Problemen entgegen zu wirken wurden sogenannte segmentierte Fassungen vorgeschlagen, bei denen zwei bzw. drei Haltestäbe parallel zur optischen Achse an der radial äußeren Peripherie in jeweils gleichen Winkelabständen voneinander, also in 120° oder 180° Abständen mit entsprechenden Abstandshaltern für die optischen Elemente eingesetzt.

Diese stabförmigen Halteelemente weisen aber eine Torsionsinstabilität auf. Sie können lediglich in Verbindung mit optischen Elementen aus Kunststoffen, die angespritzte Elemente, beispielsweise "Ohren" oder ähnliche speziell gefertigte Aufnahmestellen für die Halteelemente aufweisen, eingesetzt werden. Solche Aufnahmestellen sollen ein Verkanten oder Verkippen verhindern.

Werden solche Haltestäbe aus Kunststoff oder Metall eingesetzt, kann auch das Problem der Befestigung der optischen Elemente nicht ohne weiteres gelöst werden. Infolge der geringen Torsionsstabilität einer solchen Konstruktion sind solche Aufnahmestellen, die als "Ohren" oder Durchbrechungen an/in den optischen Elementen ausgebildet sind, erforderlich. Eine solche Ausbildung erhöht die Herstellungskosten der optischen Elemente, insbesondere bei gleicher oder erhöhter Fertigungsgenauigkeit, da u.a. Eigenspannungen im optischen Material vermieden werden sollen.

Distanzelemente, die die axialen Abstände der optischen Elemente zueinander definieren sollen, berücksichtigen üblicherweise unterschiedliche Wärmeausdehnungskoeffizienten verschiedener Materialien nicht bzw. nur ungenügend.

Die bisher bekannten Lösungen können daher für anspruchsvolle optische Abbildungsaufgaben nicht ohne weiteres eingesetzt werden.

Da auch bei einer hochgenauen Präzisionsfertigung bestimmte Toleranzgrenzen der einzelnen optischen Elemente auftreten, müssen vom idealen Zustand Fertigungsfehler in Kauf genommen werden, die beim Stand der Technik aufsummiert werden und dadurch der entsprechend erreichbare Gesamtfehler entsprechend höher ist.

Es ist daher Aufgabe der Erfindung, mehrere optische Elemente mit höherer Genauigkeit zueinander zu positionieren und in diesen Positionen zueinander zu fixieren.

Erfindungsgemäß wird diese Aufgabe mit einer Halteund Fixiereinrichtung für mindestens zwei optische Elemente gemäß Anspruch 1 gelöst. Vorteilhafte Ausgestaltungsformen und Weiterbildungen der Erfindung können mit den in den untergeordneten Ansprüchen genannten Merkmalen erreicht werden.

Die mindestens zwei optischen Elemente, die in der erfindungsgemäßen Halte- und Fixiereinrichtung positioniert werden sollen, können sowohl aus Gläsern aber auch aus Kunststoffen gefertigt sein. Die auch deutlich mehr als zwei optischen Elemente sind in der Regel optische Linsen. Die optischen Elemente können über eine rotationssymmetrische Randkontur oder definierte Kontaktstellen verfügen, und sie werden mit mindestens drei in jeweils gleichen Winkelabständen zueinander angeordneten Elementen an ihrem radialäußeren Randbereich gehalten und fixiert. Dabei sollte die Anzahl solcher Elemente jedoch möglichst nicht überschritten werden, um eine Überbestimmung der Freiheitsgrade und einen Spannungseintrag zu vermeiden.

An diesen Elementen sind zum Halten und Fixieren der optischen Elemente am äußeren Randbereich für jedes einzelne optische Element ein Fest- und ein Loslager ausgebildet. Dabei wirken die Kräfte und Momente an diesen Fest- und Loslagern im Wesentlichen nicht an der äußeren Peripherie der optischen Elemente, sondern zumindest nahezu parallel zur gemeinsamen optischen Achse der optischen Elemente an sich gegenüberliegenden Seiten der optischen Elemente, wobei jeweils an einem optischen Element an den gleichen Seiten Festlager und an den entsprechend gegenüberliegenden Seiten Loslager angeordnet sind.

Die erfindungsgemäße Lösung gewährleistet auch eine Selbstzentrierung der optischen Elemente.

Die Festlager können als hochpräzise gefertigte Anlageflächen oder punktförmig ausgebildet sein. Zumindest der Bereich dieser Anlageflächen oder Punkte sollte aus einem Material höherer Festigkeit und geringerer Wärmeausdehnung gebildet sein, wohingegen die Loslager aus anderen Materialien bestehen können.

Die Loslager können aber auch als herkömmliche Festkörpergelenke, durch Hinterschneidungen oder elastisch verformbare Elemente oder Materialien gebildet sein.

Die Fest- und Loslager für die jeweiligen optischen Elemente können an Fassungselementen ausgebildet sein, wobei auf konkretere Ausführungsformen hierfür noch später zurückzukommen sein wird.

Eine andere Alternative hierfür besteht darin, dass kammförmige Elemente mit entsprechenden Einschnitten, in die die optischen Elemente eingeführt werden können, verwendet werden. Solche kammförmigen Elemente können aus Metallblechen hergestellt werden, die an einer Längsseite die entsprechenden Einschnitte aufweisen, in die die optischen Elemente eingeführt und die mit dem optischen Element in Berührung stehenden Flächenbereiche der Einschnitte so ausgebildet sind, dass sie die Funktion von Fest- und Loslagern erfüllen können.

Das eigentliche Gehäuse und gleichzeitig die Fassung für die optischen Elemente können durch mindestens zwei aber auch mehrere, vorzugsweise drei gleich ausgebildete und dimensionierte Segmente, die formund/oder kraftschlüssig miteinander verbunden werden, gebildet sein. An diesen Segmenten sind die Fassungselemente mit den Fest- und Loslagern für die optischen Elemente ausgebildet oder beispielsweise die bereits erwähnten und beschriebenen kammförmigen Elemente sind mit diesen Segmenten verbunden.

Die Segmente können aus Metall oder auch Kunststoff bestehen, wobei in jedem Fall an den Segmenten Öffnungen, Schlitze oder Formelemente für die kraftund/oder formschlüssige Verbindung der jeweils verwendeten Segmente, ausgebildet sind.

Vorteilhaft sind an jedem Segment mindestens vier solcher Öffnungen, Schlitze oder Formelemente für die kraft- und/oder formschlüssige Verbindung ausgebildet, um unter Berücksichtigung aller Freiheitsgrade eine genaue und sichere Positionierung und Fixierung dieser Segmente zu gewährleisten. Besonders vorteilhaft können Kugelgelenke für die form- und/oder kraftschlüssige Verbindung der Segmente miteinander eingesetzt werden.

Um dem Problem der großen Wärmeausdehnung entgegen zu treten, wie es in der Beschreibungseinleitung bereits angesprochen worden ist, sollte die erfindungsgemäße Halte- und Fixiereinrichtung zumindest teilweise aus einem Material mit geringerer Wärmeausdehnung bestehen. Geeignete Materialien sind entsprechende Metalle, beispielsweise Stahl. Es können aber auch andere Materialien, wie beispielsweise Keramiken oder faserverstärkte Verbundwerkstoffe eingesetzt werden. Günstig können formbeständige Werkstoffe mit kristalliner Struktur verwendet werden. Neben dem Wärmeausdehnungsverhalten ist demzufolge auch die Festigkeit und Formstabilität von Bedeutung, die vom jeweiligen Werkstoff und der Gestalt beeinflusst werden kann.

Aus Kosten-, Ästhetischen- und Korrosionsschutzgründen kann aber auch eine Kombination solcher Materialien mit geringerem Wärmeausdehnungskoeffizienten und Kunststoff eingesetzt werden. Das Material mit dem geringeren thermischen Ausdehnungskoeffizienten sollte eine Wärmeausdehnung unterhalb 25*10*⁻⁶K⁻¹ erreichen.

Dieses Material kann dann beim Spritzgießen in Kunststoff eingespritzt und so mit dem Kunststoff verbunden werden, was sich besonders günstig bei den kammförmigen Elementen erweist.

Es kann aber auch Kunststoffmaterial um- bzw. an bestimmte Bereiche angespritzt werden.

Um gegebenenfalls auftretende Fertigungs- oder Positionierfehler nochmals kompensieren zu können, sollten zumindest für ein optisches Element eine Justierung möglich sein. Hierfür können entsprechende Justierelemente an mindestens den jeweiligen Fassungselementen eines optischen Elementes vorhanden sein, wodurch eine Justierung bezüglich des achsialen Abstands, der Verkippung oder eine Abweichung von der gemeinsamen optischen Achse in Grenzen ausgeglichen werden kann.

Um die gewünschte sehr hohe und gegenüber dem Stand der Technik erhöhte Präzision bei der Positionierung mehrerer optischer Elemente zueinander zu sichern, sollen die jeweils in gleicher Form ausgebildeten Elemente und auch möglichst die Segmente identisch in ihrer Dimensionierung, was sämtliche Abmaße betrifft, und auch identisch gestaltet sein. Dies kann dadurch erreicht werden, dass sämtliche Elemente mit identischen Werkzeugen gefertigt werden, wobei außerdem mehrere solcher Elemente oder auch die Segmente, die unmittelbar nachfolgend in den jeweiligen Werkzeugen gefertigt worden sind, zu einer Halte- und Fixiereinrichtung zusammen gefügt werden sollen.

Mit der erfindungsgemäßen Lösung kann die Präzision, beispielsweise einer Projektionsoptik höher sein, als die eigentlich erreichbaren Fertigungstoleranzen der einzelnen optischen Elemente und der Elemente, mit denen diese optischen Elemente gehalten und fixiert werden können, da eine Fehlerkompensation erreicht wird.

Die Anlageflächen bzw. Anlagestellen, die die eigentlichen Festkörpergelenke für die optischen Elemente bilden, sollten möglichst im Berührungsbereich mit den optischen Elementen an deren Kontur angepasst sein, um möglichst geringe Spannungen in den jeweiligen optischen Elementen hervorzurufen.

Durch die gleiche Ausbildung der die optischen Elemente fixierenden und haltenden Elemente werden die Herstellungsfehler symmetrisch wirksam und können radial und axial weitestgehend kompensiert werden, da eine Selbstzentrierung erreicht werden kann.

Mit Hilfe der Loslager kann an jedem optischen Element ein axialer und/oder radialer Toleranzausgleich erreicht werden.

Da die jeweiligen optischen Elemente mittels gemeinsamer Fassungselemente, die einmal an den bereits erwähnten Segmenten angeordnet und ausgebildet sein können oder mittels der mindestens drei kammförmigen Elemente, die dann aus den Materialien mit dem relativ kleinen Ausdehnungskoeffizienten gebildet sind, relativ starr verbunden sind, können sie sich in ihrer Lage zueinander, was insbesondere den axialen Abstand voneinander betrifft, nahezu nicht verändern.

Mit der erfindungsgemäßen Halte- und Fixiereinrichtung können unterschiedlichste optische Elemente zueinander positioniert und gehalten werden. Dabei können unterschiedliche Materialien für die optischen Elemente, auch mit unterschiedlichen Werkstoffklassen und selbstverständlich auch größere oder kleinere Auβendurchmesser eingesetzt werden. Es besteht Unabhängigkeit von der jeweiligen Masse und der Geometrie. Es können unterschiedliche optische Linsen, also auch plankonvexe oder auch plankonkave eingesetzt werden. Selbstverständlich können auch andere optische Elemente, wie beispielsweise bestimmte optische Blenden oder Gitter eingesetzt werden.

Nachfolgend soll die Erfindung beispielhaft an Ausführungsbeispielen näher erläutert werden.

Dabei zeigen:
- Figur 1: eine perspektivische Darstellung eines Segmentes, das mit weiteren zwei Segmenten eine Halte- und Fixiereinrichtung für optische Elemente bilden kann;
- Figur 2: eine Art Explosionsdarstellung eines solchen Segmentes mit Einzelteilen;
- Figur 3: in schematischer Form einer aus drei solcher Segmenten zusammensetzbaren Halte- und Fixiereinrichtung für optische Elemente;
- Figur 4a: eine Darstellung eines Beispiels einer erfindungsgemäßen Halte- und Fixiereinrichtung mit kammförmigen Elementen;
- Figur 4b: drei Segmente in perspektivischer Darstellung mit verbundenen drei kammförmigen Elementen;
- Figur 5a: ein weiteres Beispiel einer erfindungsgemäßen Halte- und Fixiereinrichtung, das aus zwei miteinander verbindbaren Segmenten, an denen kammförmige Elemente befestigt sind, gebildet ist;
- Figur 5b: ein Beispiel mit zwei Segmenten und vier kammförmigen Elementen und
- Figur 6: eine perspektivische Darstellung mit drei schalenförmigen Elementen.

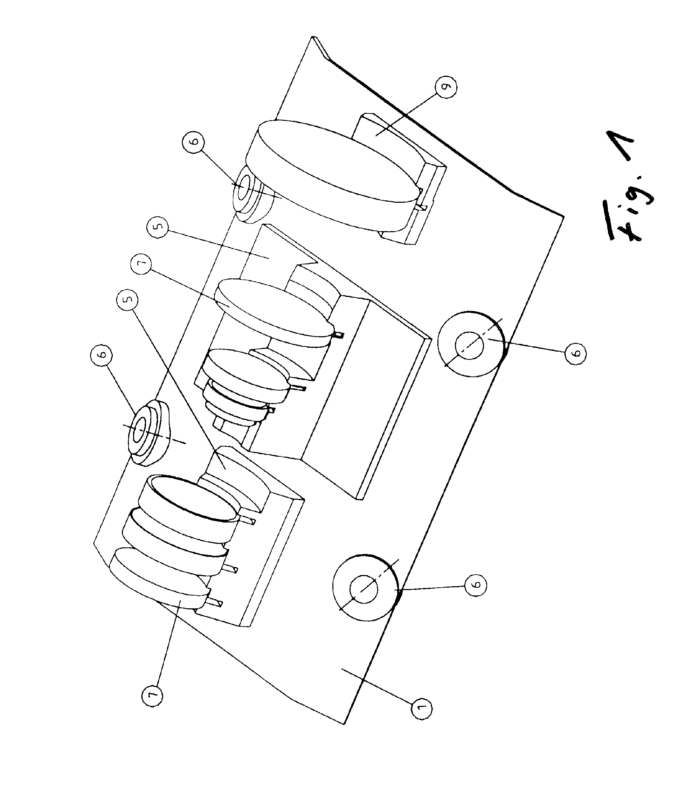

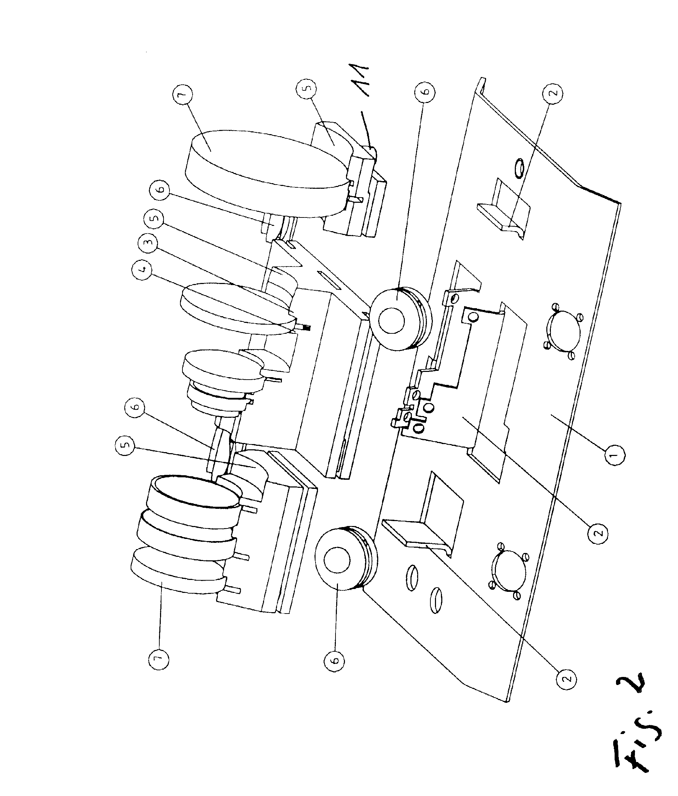

Mit den Figuren 1 bis 3 soll ein Beispiel einer erfindungsgemäßen Halte- und Fixiereinrichtung verdeutlicht werden. Dabei wird eine solche Halte- und Fixiereinrichtung im Wesentlichen aus drei identischen Segmenten 1, die im Wesentlichen aus einem Metallblechgrundkörper, der durch Stanzen und Biegen hergestellt worden ist, form- und/oder kraftschlüssig miteinander zusammengefügt werden können. Dabei sind an diesem Metallblechgrundkörper durch Stanzen oder Biegen Formelemente 2 sowie Aufnahmen für Kugelgelenke 6 ausgebildet worden, wie dies insbesondere aus Figur 2 entnommen werden kann. Dabei sind die Anordnung, die Gestaltung und die Höhe der über den Blechgrundkörper hinausgehend ist, die jeweils zu haltenden und fixierenden optischen Elemente 7 weitestgehend berücksichtigt. Diese so erhaltenen Formelemente 2 können dann mit Kunststoff in an sich bekannter Form umspritzt werden, so dass letztendlich die Fassungselemente 5 für die optischen Elemente mit den jeweiligen Festlagern 3 und den Loslagern 4 ausgebildet werden können. Dabei kann ein geeignetes Kunststoffmaterial die Funktion des Loslagers 4 erfüllen.

In die an den Segmenten 1 ausgebildeten Öffnungen werden die Kugelgelenke 6 eingesetzt und mit Hilfe dieser Kugelgelenke 6 können die drei Segmente 1 nach Bestückung mit den optischen Elementen 7 zusammengefügt werden, wobei eine sehr exakte Positionierung und Ausrichtung sowohl der drei Segmente 1, wie auch der Festlager 3 und der Loslager 4 für die jeweiligen optischen Elemente 7, die bei diesem Beispiel in jeweils Winkelabständen von 120° zueinander angeordnet sind, erreichbar ist.

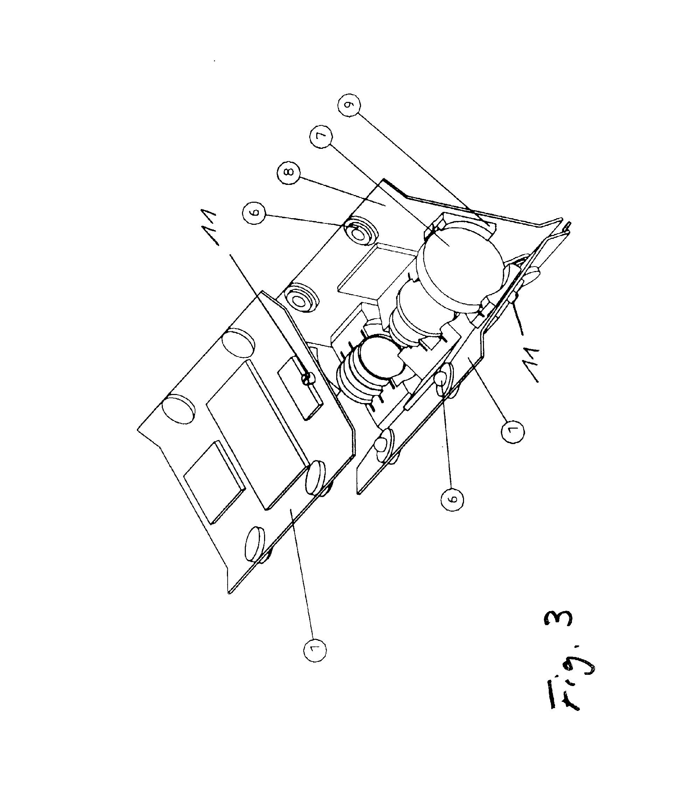

Insbesondere in Figur 3 ist auch die Möglichkeit des Einsatzes zumindest eines Justierelementes 9, das z.B. mit einer Justierschraube 11 manipuliert werden kann, angedeutet. Dieses kann eine Nachjustierung des entsprechenden optischen Elementes 7 gewährleisten. Dabei kann mittels einer lös- und wieder fixierbaren Schraubverbindung ein axiales bzw. radiales Nachjustieren dieses optischen Elementes 7 sichern, so dass gegebenenfalls Abstandsfehler, Abweichungen von der gemeinsamen optischen Achse oder auch Verkippungen des gesamten optischen Aufbaus zumindest teilweise wieder ausgeglichen werden können.

Mit den Verbindungselementen 6, die bevorzugt Kugelgelenke sind, kann eine lateral steife und winkelausgleichende Verbindung der einzelnen Segmente 1 erreicht werden.

Die verwendeten Segmente 1 wurden sowohl als Blechgrundkörper im gleichen Werkzeug, wie auch im gleichen Spritzgußwerkzeug hergestellt bzw. weiterverarbeitet, so dass sie zumindest nahezu identisch in ihrer Geometrie und Dimensionierung sind.

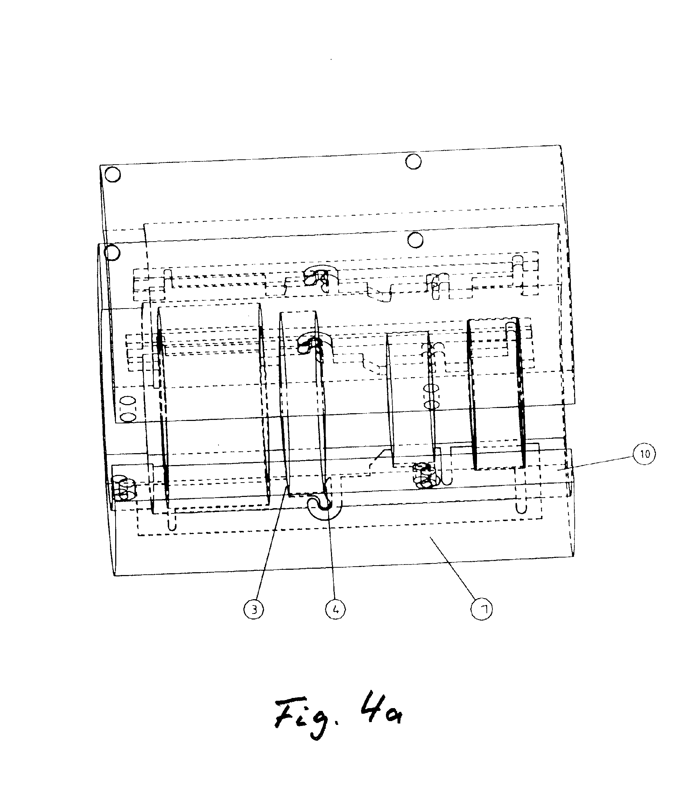

Bei dem Ausführungsbeispiel, wie es in den Figuren 4a und 4b dargestellt ist, können drei Segmente 1 nach Bestückung mit optischen Segmenten 7 zu einer Einheit zusammengefügt werden.

Dabei ist in jedem dieser Segmente parallel zur gemeinsamen optischen Achse ein kammförmiges Element 10 vorhanden. Dieses kammförmige Element 10 ist besonders vorteilhaft aus einem Metallkörper oder -blech durch Stanzen oder Schneiden hergestellt worden. Dabei wurden bestimmte Einschnitte, in die in Richtung auf die äußeren Ränder der jeweiligen optischen Elemente 7 weisende Seitenfläche solcher kammförmiger Elemente 10 ausgebildet. Dabei wurde die Kontur dieser Einschnitte so gewählt, dass eine Seite dieses Einschnittes eine Anlagefläche, als Festlager 3 für das jeweils zu haltende und fixierende optische Element und die gegenüberliegende Seite ein Loslager 4 bildet, wie dies insbesondere aus Figur 4a deutlich wird. Das Loslager 4 ist hier in Form eines Festkörpergelenkes ausgebildet.

Die Segmente 1, die beim Beispiel nach Figur 4a und 4b eingesetzt werden können, können aus Kunststoff mit herkömmlichen Spritzverfahren hergestellt werden. Dabei besteht die Möglichkeit, die aus einem Metall oder einem anderen geeigneten Material bestehenden kammförmigen Elemente 10 in das Kunststoffmaterial einzuspritzen oder in dem jeweiligen Segment 1 eine entsprechende Längsnut auszubilden, in die dann ein kammförmiges Element 10 eingeführt und entsprechend dort form- und/oder kraftschlüssig gehalten werden kann.

Auch beim Beispiel nach den Figuren 4a und 4b erfolgt die Fixierung der jeweiligen optischen Elemente 7 in Abständen von jeweils 120°, was eine nahezu optimale Lösung darstellt, da keine Überbestimmung der möglichen Befestigung unter Berücksichtigung der Freiheitsgrade auftritt.

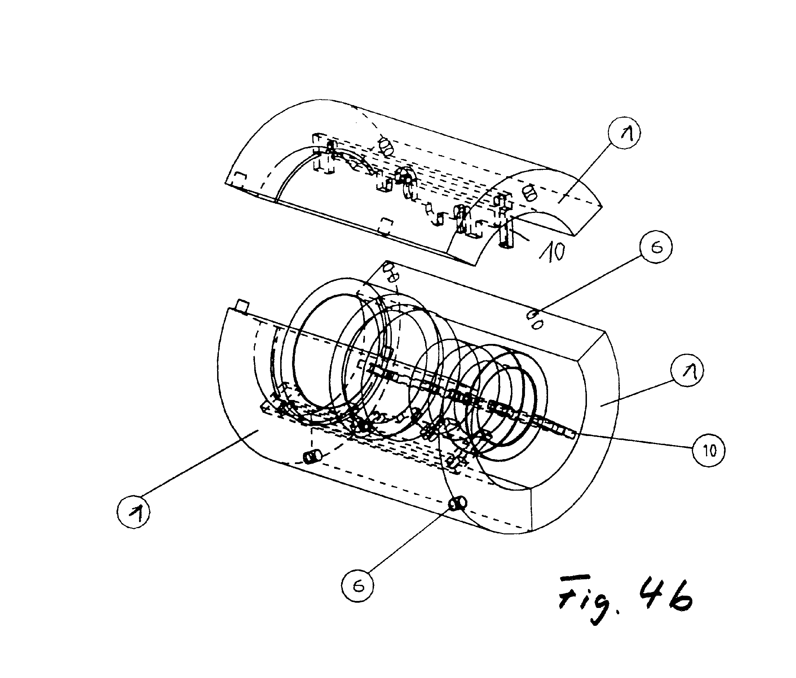

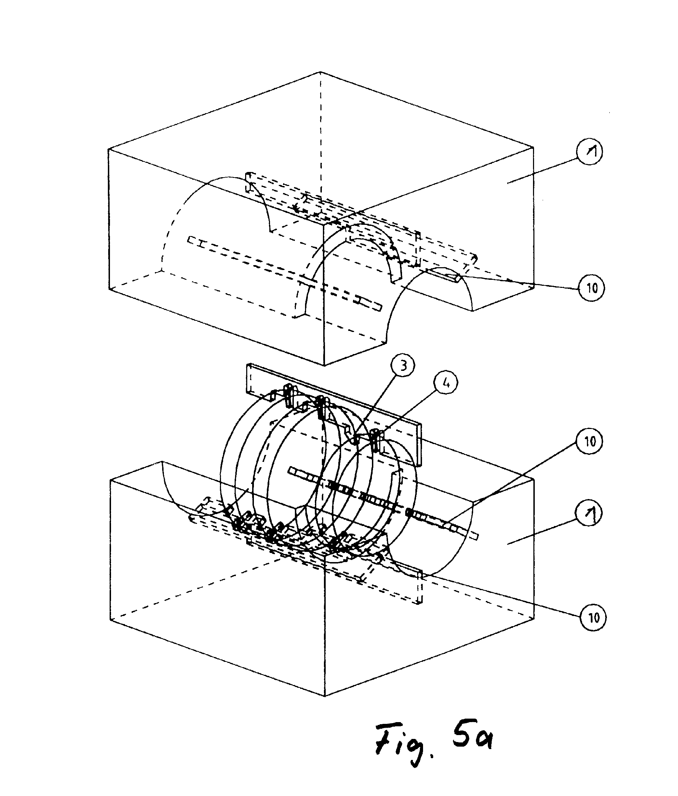

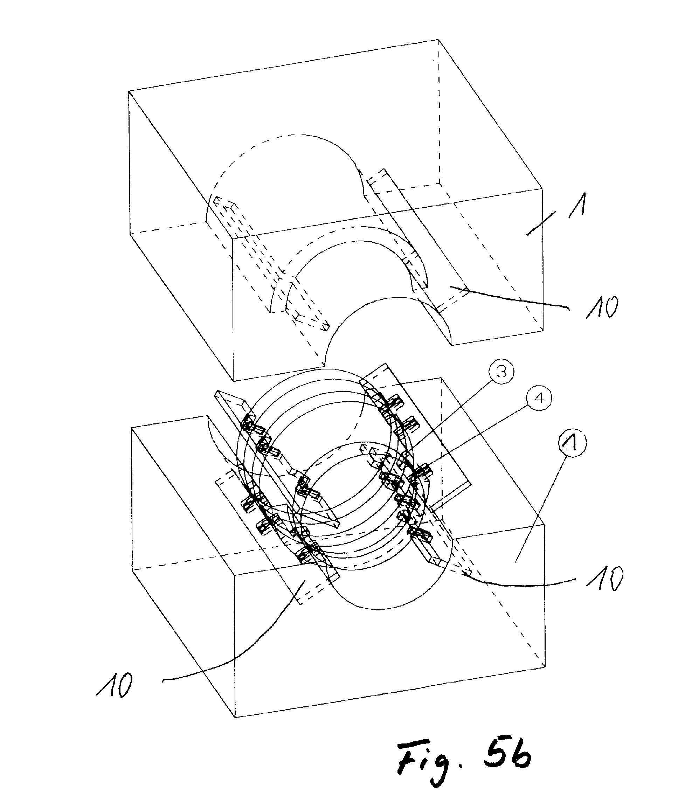

Das in den Figuren 5a und 5b gezeigte Beispiel verwendet wiederum zwei identische Segmente 1, die aufeinandergesetzt werden und form- und kraftschlüssig miteinander verbunden werden können.

Für die Halterung und Fixierung der optischen Elemente werden wiederum kammförmige Elemente 10 parallel zur optischen Achse der optischen Elemente 7 eingesetzt.

Dabei besteht die Möglichkeit die beiden Segmente 1 symmetrisch auszubilden und entsprechend herzustellen, wobei dann vier solcher kammförmiger Elemente 10 in 90° Abständen zueinander eingesetzt und beispielsweise in die Segmente 1, die aus Kunststoff im Spritzguß hergestellt werden können, bereits eingespritzt werden können.

Es besteht aber auch die Möglichkeit, wie beim Beispiel nach den Figuren 4a und 4b angesprochen, entsprechende Längsnuten in den Segmenten 1 auszubilden, in die dann kammförmige Elemente 10 eingesetzt werden können. In diesem Fall können die Längsnuten dann in Winkelabständen von 60° ausgebildet werden, wodurch wiederum die Möglichkeit besteht, drei solcher kammförmiger Elemente 10 einzuführen und wiederum die günstige nicht überbestimmte Fixierung von optischen Elementen 7 mit Winkelabständen von 120° zu sichern.

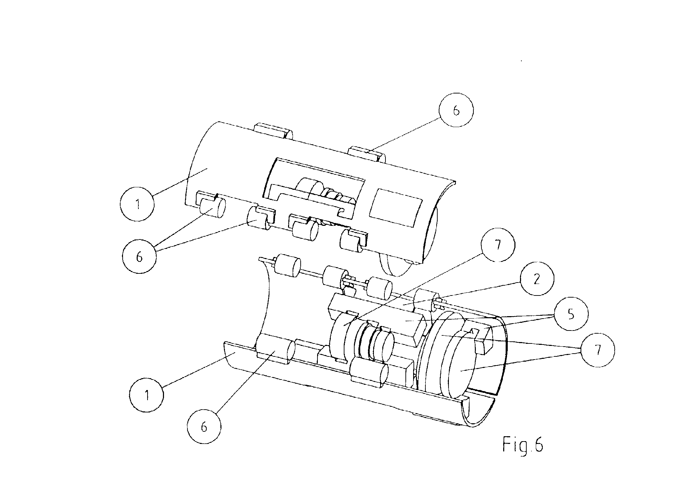

In der Figur 6 ist eine perspektivische Darstellung in schematischer Form eines Beispiels mit drei schalenförmigen Segmenten 1 gezeigt. Die Segmente 1 sind dabei in Form von Teilkreisen bogenförmig gekrümmt und können mit Halteelementen 6 form- und/oder kraftschlüssig miteinander verbunden werden, so dass die optischen Elemente 7 mit den Fassungselementen 5 in einem Winkelabstand von jeweils 120° mit den bereits vorab mehrfach erwähnten und beschriebenen Fest- und Loslagern gehalten und fixiert werden.

An jedem Segment 1 sind insgesamt vier Verbindungselemente 6 angeordnet. Diese Verbindungselemente 6 sind an den sich gegenüberliegenden seitlichen Stirnwänden der Segmente 1 jeweils komplementär zueinander ausgebildet, so dass durch die Konturen und die jeweilige Größe der Verbindungselemente 6 wegen der sicheren Verbindung der drei Segmente 1 auch eine sehr genaue Ausrichtung der einzelnen Segmente 1 und demzufolge auch der Fassungselemente 5 für die einzelnen optischen Elemente 7 erreicht werden kann.

Zur form- und/oder kraftschlüssigen Verbindung solcher Segmente 1, wie sie in sämtlichen näher erläuterten Beispielen eingesetzt werden können, können nicht nur die bereits erwähnten Kugelgelenke 6 eingesetzt werden, sondern es besteht auch die Möglichkeit, andere hierfür geeignete Elemente zu nutzen, wodurch ein einfaches Öffnen und Auseinandernehmen bzw. wieder Zusammensetzen der einzelnen Segmente im Bedarfsfall möglich ist.

## Patentansprüche

1. Halte- und Fixiereinrichtung für mindestens zwei optische Elemente,
bei der die optischen Elemente (7) mittels jeweils in gleicher Form ausgebildeten Elementen (1, 2, 10) an mindestens drei in jeweils gleichen Winkelabständen zueinander angeordneten radial äußeren Randbereichen an jeweils gleichen Seiten mittels jeweils eines Festlagers (3) und an der dieser gegenüberliegenden Seite mittels Loslagern (4) gehalten sind.

2. Halte- und Fixiereinrichtung nach Anspruch 1, **dadurch gekennzeichnet, dass** die optischen Elemente (7) eine rotationssymmetrische Randkontur aufweisen.

3. Halte- und Fixiereinrichtung nach Anspruch 1 oder 2, **dadurch gekennzeichnet, dass** die Festlager (3) und die Loslager (4) an Fassungselementen (5) oder durch Ausbildung von entsprechenden Einschnitten in kammförmigen Elementen (10) in die optische Elemente (7) einführbar sind, angeordnet oder dort ausgebildet sind.

4. Halte- und Fixiereinrichtung nach einem der Ansprüche 1 bis 3, **dadurch gekennzeichnet, dass** die Loslager (4) als Festkörpergelenke oder mittels Hinterschneidungen ausgebildet sind.

5. Halte- und Fixiereinrichtung nach einem der Ansprüche 1 bis 4, **dadurch gekennzeichnet, dass** Fassungselemente (5) oder kammförmige Elemente (10) an jeweils mindestens zwei form- und/oder kraftschlüssig miteinander verbindbaren Segmenten (1) ausgebildet oder mit den Segmenten (1) verbunden sind.

6. Halte- und Fixiereinrichtung nach Anspruch 5, **dadurch gekennzeichnet, dass** an den Segmenten (1) jeweils mindestens vier Öffnungen, Schlitze oder Formelemente für die kraft- und/oder formschlüssige Verbindung der Segmente (1) miteinander ausgebildet sind.

7. Halte- und Fixiereinrichtung nach Anspruch 5 oder 6, **dadurch gekennzeichnet, dass** die Verbindungselemente (6) für die Segmente (1) Kugelgelenke sind.

8. Halte- und Fixiereinrichtung nach einem der Ansprüche 1 bis 7, **dadurch gekennzeichnet, dass** die in jeweils gleicher Form ausgebildeten Elemente (1, 2, 10) zumindest teilweise an den Bereichen, an denen die Festlager (3) und die Loslager (4) angeordnet sind, aus einem Material mit geringerer Wärmeausdehnung bestehen.

9. Halte- und Fixiereinrichtung nach Anspruch 8, **dadurch gekennzeichnet, dass** diese Bereiche oder Elemente (10) aus Metall bestehen.

10. Halte- und Fixiereinrichtung nach Anspruch 8 oder 9, **dadurch gekennzeichnet, dass** die anderen Bereiche oder die Segmente (1) aus einem Kunststoffmaterial gebildet sind.

11. Halte- und Fixiereinrichtung nach einem der Ansprüche 1 bis 10, **dadurch gekennzeichnet, dass** Metallteile in Kunststoffteile eingelegt, eingespritzt, Kunstoff daran angespritzt oder Metallteile mit Kunststoff umspritzt sind.

12. Halte- und Fixiereinrichtung nach einem der Ansprüche 1 bis 11, **dadurch gekennzeichnet, dass** an mindestens einem Fassungselement (5) Justierelemente vorhanden sind.

13. Halte- und Fixiereinrichtung nach einem der Ansprüche 1 bis 12, **dadurch gekennzeichnet, dass** die optischen Elemente (7) optische Linsen sind.

14. Verwendung einer Halte- und Fixiereinrichtung nach einem der Ansprüche 1 bis 13, als Projektionsoptik.
